# EUROPÄISCHE PATENTSCHRIFT

(11) **EP 0 724 512 B1**
(45) Veröffentlichungstag und Bekanntmachung des Hinweises auf die Patenterteilung: **09.07.1997**
(21) Anmeldenummer: 94929462.3
(22) Anmeldetag: 11.10.1994
(51) Int. Cl.: B29C 31/02, B29C 45/18, B29B 13/06

(54) **BESCHICKUNGSVORRICHTUNG**
FEEDING DEVICE
DISPOSITIF D'ALIMENTATION

(30) Priorität: 18.10.1993 DE 4335404
(43) Veröffentlichungstag der Anmeldung: 07.08.1996
(73) Patentinhaber: Hehl, Karl, D-72290 Lossburg (DE)
(72) Erfinder: Hehl, Karl, D-72290 Lossburg (DE)
(74) Vertreter: Reinhardt, Harry
(86) Internationale Anmeldenummer: DE9401205
(87) Internationale Veröffentlichungsnummer: WO9511121

(56) Entgegenhaltungen:
- FR-A- 2 261 856
- FR-A- 2 311 642
- AUFBEREITUNGS-TECHNIK, Bd.14, Nr.9, September 1973 Seiten 566 - 570 ENDERS M. 'Das Trocknen von Thermoplasten' siehe Absatz 7.2; Abbildung 6

## Beschreibung

Die Erfindung betrifft eine Vorrichtung zur Beschickung einer Verarbeitungsmaschine, insbesondere einer Kunststoff-Spritzgießmaschine nach dem Oberbegriff des Anspruches 1.

Bei einer derartigen Beschickungsvorrichtung nach der DE-C 24 09 128 wird das Verarbeitungsmaterial mittels eines erwärmten Luftdruckstromes in einen Beschickungsbereich transportiert, der der Spritzgießmaschine zugeordnet ist, wobei in diesem Bereich die Druckluft über ein für das Material undurchlässige Filter entweichen kann. Die Druckluft wird dabei zugleich zum Trocknen des Verarbeitungsmaterials genutzt, in dem die Druckluft über einen Anströmboden dem Material zugeführt wird, wobei der hier nach oben steigende Luftstrom mit zunehmender Steighöhe Feuchtigkeit des Materials aufnimmt, so daß ein Verklumpen von Material nachhaltig vermieden werden kann. Die dem Trocknungsbehälter zugeführte Luft verläßt diesen über ein im Deckel vorgesehenes Ventil in eine Rückführleitung oder in die Atmosphäre, sofern die außerhalb des Gerätes vorgesehene Rückführleitung nicht am Ansaugstutzen des Drucklufterzeugers angeordnet ist. Zwar sind die Bauelemente dieser Vorrichtung durch ihre äußerliche Anordnung leicht zugänglich, jedoch stört die äußerlich angebrachte Rückführleitung beispielsweise die Bedienung des Deckels beim Nachfüllen von Material in das Gerät. Der Einsatz von Zusatzgeräten ist grundsätzlich nicht vorgesehen und kann nur mit beträchtlichem Mehraufwand durch weitere äußerlich anzuordnende Komponenten verwirklicht werden. Da die erwärmte Luft über einen Anströmboden in einen unteren Teil des Behälters gelangt, geht im Innern des Gehäuses sehr viel Raum verloren, der einerseits einen kompakten Aufbau des Gerätes erschwert und andererseits das speicherbare Verarbeitungsmaterial-Volumen verringert. Bei extremen Bedingungen kann die zur Förderung bestimmte Luft jedoch schon wieder so angefeuchtet sein, daß sich Verklumpungen in der Förderleitung ergeben.

In der DE-A 14 54 806 ist ein Granulatbehälter auf dem Einfüllschacht einer Maschine angeordnet, bei dem ein Gebläse Luft zum Trocknen des Materials in einer mittleren Zone des Granulatbehälters zur Verfügung stellt. Die Luft kann über einen ständig geöffneten Stutzen entweichen, der mit einem weiteren Stutzen in ständiger Verbindung steht, über dem ein Teil der Luft auch wiederum dem Gebläse zugeführt werden kann. Die Anordnung des mit der Außenluft in Verbindung stehenden Stutzens hat jedoch den Nachteil, daß ständig feuchte Frischluft mit angesaugt wird. Ein Fördern von Material ist nicht vorgesehen, da das Material der Schwerkraft folgend in die Maschine gelangt. Die Rückführleitung, das Gebläse und das die Frischluft oder Umluft verstellende Organ sind äußerlich am Behälter angeordnet, was aufgrund der Anordnung am Einfüllschacht der Maschine weniger störend ist. Gerade bei schnell laufenden Maschinen oder bei der Verarbeitung mehrerer Materialien ist jedoch die Anordnung eines Materialbehälters unmittelbar an der Maschine aufgrund der größeren zu bewegenden Massen unerwünscht.

Aus dem DE-GM 18 96 723 ist eine Trockenvorrichtung bekannt, bei der im Fuß eines Gestells ein Ventilator zur Zufuhr von erwärmter Luft in über dem Gestell angeordnete Trocknungsbehälter vorgesehen ist. Das Granulat wird hier chargenweise getrocknet, eine Weiterleitung unmittelbar an eine Maschine ist nicht beabsichtigt. Aufgrund der Anordnung der Trocknungsbehälter oberhalb der Tischebene ist unterhalb des Gestells ausreichend Raum vorhanden, was durch den erhöhten Platzbedarf oberhalb des Tisches erkauft wird. Da der Ventilator lediglich zum Trocknen des Materials eingesetzt wird, saugt er lediglich die erwärmte Luft aus dem Material ab, muß jedoch keine Druckluft erzeugen.

Ausgehend von diesem Stand der Technik liegt der vorliegenden Erfindung die Aufgabe zugrunde, eine Vorrichtung der eingangs genannten Gattung derart weiterzubilden, daß eine leicht zu handhabende, kompakte und an die unterschiedlichen Erfordernisse des Spritzgießbetriebes anpaßbare Vorrichtung geschaffen wird, die auch extremen Förderbedingungen gerecht wird.

Diese Aufgabe wird durch die Merkmale des Anspruches 1 gelöst.

Im Innern der Vorrichtung wird dabei ein Überführungselement vorgesehen, das durch einen Handgriff oder gegebenenfalls auch automatisch in Stellungen überführbar ist, in denen entweder ein Frischluftbetrieb oder ein Umluftbetrieb verwirklicht wird. Dadurch ergibt sich ein kompakter Aufbau des Gerätes, und ganz nach Wunsch des Kunden kann allein durch die Betätigung des Überführungselements eine Umstellung erfolgen, ohne daß ein zusätzlicher Montageaufwand beispielsweise zur Entfernung der Rückführleitung erforderlich ist. Dabei werden aber auch die grundsätzlichen Voraussetzungen dafür geschaffen, daß in einem abgeschlossenen Gehäuse weitere Bauteile integriert werden können oder bereits integriert sind, so daß auf die jeweiligen Kundenwünsche leicht einzugehen ist. Aber auch für die Entleerung ergeben sich durch die einerseits im Innern angeordnete Rückführleitung und die sich daraus ergebende Abkopplung vom Auslaß des Trocknungsbehälters erleichterte Möglichkeiten zur Entleerung der Vorrichtung. Durch die Anordnung des Ansaugstutzens im Innern der Vorrichtung beeinträchtigen Verschmutzungen im Umfeld der Maschine von vornherein nicht die Trocknungsfähigkeit.

An dem Frischluftanschluß kann bedarfsweise ein Luftbehandlungsgerät wie z.B. ein Lufttrockner vorgesehen werden, der in Verbindung mit der Anordnung des Überführungselements in einem geschützten Raum innerhalb des Gehäuses Platz findet und dennoch getrocknete Luft selbst für den erhöhten Luftdurchsatz beim Fördern des Verarbeitungsmaterials in ausreichender Menge zur Verfügung stellt, so daß auch bei ungünstigsten Luftfeuchtigkeitsbedingungen in humiden Ländern ein Verklumpen des Materials in der Förderleitung vermieden wird.

Der gesamte Trocknungsbehälter ist nach Anspruch 2 so ausgelegt, daß er sich einerseits nahezu zum Boden des Gehäuses erstreckt, andererseits aber durch eine Trennwand im wesentlichen etwas mehr als die Hälfte des Gehäuses in Anspruch nimmt, so daß sich ein erheblich gesteigertes Volumen an Aufnahmekapazität für Verarbeitungsmaterial ergibt.

### Die beigefügten Figuren zeigen:

- Fig. 1: Eine schematische, teilweise geschnittene Darstellung durch die Vorrichtung im Frischluftbetrieb,
- Fig. 2: eine Darstellung gemäß Fig. 1 im Umluftbetrieb,
- Fig. 3,4: eine Darstellung gemäß Fig. 1 im Trockenluftbetrieb mit aus- und eingebautem Trockenluftgerät,
- Fig. 5: eine Darstellung der Vorrichtung gemäß Fig. 1 während der Materialförderung,
- Fig. 6,7: einen vergrößerten Ausschnitt aus Fig. 1 im Bereich des Rückschlagventils 22 in geschlossener und geöffneter Position,
- Fig. 8-10: einen vergrößerten Ausschnitt im Bereich des Schiebers in Frischluft-, Trockenluft- und Umluftstellung,
- Fig. 11,12: einen vergrößerten Ausschnitt der Vorrichtung gemäß Fig. 1 im Bereich des Auslasses des Trocknungsbehälters in Förder- und Entleerungsstellung.

Die Vorrichtung dient der automatischen Beschickung einer Verarbeitungsmaschine mit rieselfähigem Gut. Ihr Einsatz ist insbesondere für eine Kunststoff-Spritzgießmaschine vorgesehen, die mit Kunststoffgranulaten, Kunststoffpulver oder Materialien vergleichbarer Konsistenz beschickt werden muß. Im Bereich der Kunststoff-Spritzgießmaschine ist ein Beschickungsbehälter vorgesehen, der den letzten Teil einer Förderleitung 11 bildet. In diesem Bereich wird die zur Förderung des Verarbeitungsmaterials eingesetzte Druckluft über einen für die Luft durchlässigen, aber für das Verarbeitungsmaterial undurchlässigen Filter 12 in die Atmosphäre abgeleitet. In der Vorrichtung ist ein Trocknungsbehälter vorgesehen, von dem aus mindestens eine Spritzgießmaschine bedient werden kann. Der Trocknungsbehälter dient insofern als Vorratsbehälter und steht mit der erwärmten Druckluft in Verbindung, die von einem Drucklufterzeuger 13 im Ausführungsbeispiel durch eine Radialpumpe erzeugt wird. Im Bereich des Trocknungsbehälters 10 zweigt die Förderleitung 11 von dem Kanal 14 für die Druckluft ab. Insofern dient die erwärmte Druckluft gleichzeitig als Fördermittel. Der Drucklufterzeuger 13 saugt Luft über einen Ansaugstutzen 13a an. Von dem im Drucklufterzeuger nachgeschalteten Kanal 14, in dem eine Heizvorrichtung 19 vorgesehen ist, zweigt im Bereich eines Verteilers 25 sowohl die Förderleitung 11 als auch eine Steigleitung 20 ab.

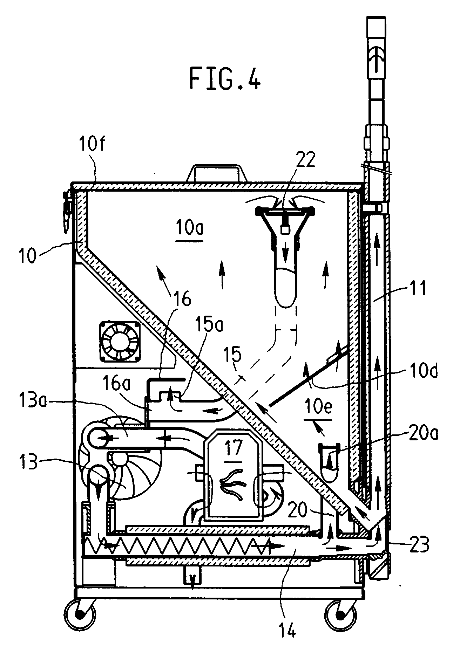

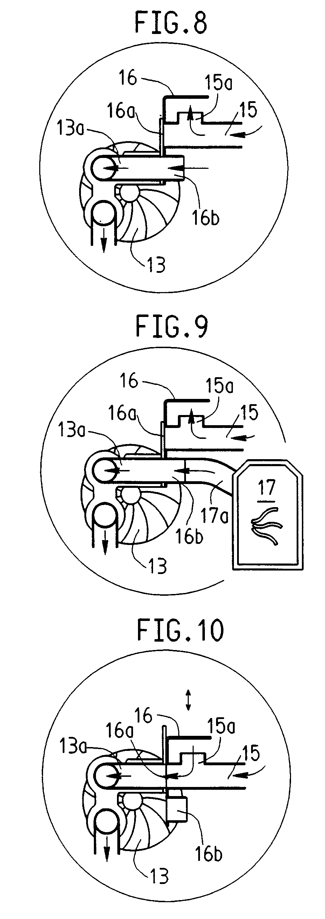

Am Trocknungsbehälter 10 ist eine Rückführleitung 15 angeschlossen, die mit dem Ansaugstutzen des Drucklufterzeugers für eine Umluftstellung verbindbar ist. Im Bereich des Ansaugstutzens 13a des Drucklufterzeugers 13 ist ein als Überführungselement ausgebildeter Schieber 16 vorgesehen, der in wenigstens zwei Stellungen überführbar ist. Insofern besitzt er wenigstens zwei Anschlüsse 16a,16b, wobei am einen Anschluß 16a die Rückführleitung 15 angeschlossen ist und an einem zweiten Anschluß 16b ein Luftbehandlungsgerät wie z.B. ein Lufttrockner 17 anschließbar ist (Fig. 4,9). Der zweite Anschluß 16b kann bedarfsweise jedoch auch unmittelbar aus dem Inneren des Gehäuses Frischluft ansaugen (Fig. 8). Es versteht sich von selbst, daß der Schieber auch beispielsweise drei Anschlüsse aufweisen kann, so daß die zusätzliche Verbindung des Anschlusses 16b mit dem Stutzen 17a des Lufttrockners 17 nicht jedes Mal neu geschaffen werden muß.

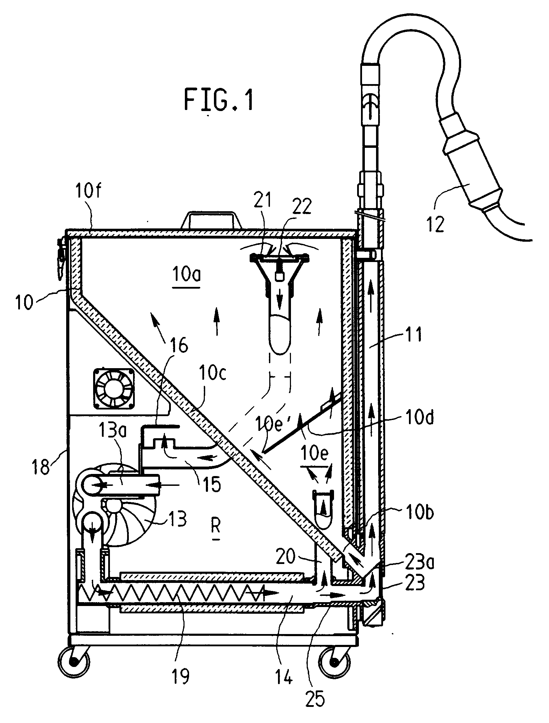

Im Innern des Gehäuses 18 ist, wie durch Vergleich von Fig. 1 und 4 ersichtlich, im Bereich des Anschlußstutzens 13a ein Raum R für die Anordnung eines als Luftbehandlungsgerät ausgebildeten Lufttrockners 17 vorgesehen. Bei dem Lufttrockner handelt es sich um einen mit einem Silicagelrotor ausgestatteten Luftentfeuchter, der kontinuierlich arbeitet, d.h. der Rotor dreht sich ständig mit festgelegter Umlaufgeschwindigkeit und durchläuft dabei zwei Zonen. In der ersten Zone wird von außen angesaugte Luft mit Umgebungstemperatur über einen Filter durch die wabenförmig angeordneten Kanäle des Rotors geblasen und dabei durch Absorption auf einen niedrigen Taupunkt getrocknet. Diese trockene Luft hat nun eine erhöhte Wasseraufnahmekapazität und wird als solche dem Frischluftkanal der Vorrichtung zugeführt. In der zweiten Zone wird das gesättigte Silicagel des Rotors getrocknet, um weiterhin kontinuierlich für die Lufttrocknung verwendet zu werden. Diese Eigentrocknungszone 17b wird mit erhitzter Umgebungsluft beschickt, die das Trocknungsgerät als Abluft wieder verläßt.

Der Trocknungsbehälter 10 weist einen trichterförmigen Abschnitt 10a auf, dessen mit der Förderleitung 11 verbindbarer Auslaß an der Seite 18a des Gehäuses vorgesehen ist. Die Trennwand 10c des Trocknungsbehälters teilt dabei das Gehäuse in zwei Teile, nämlich in einerseits den Vorratsbehälter und andererseits die für den Betrieb erforderlichen oder optional integrierbaren Bauelemente wie z.B. Lufttrockner, Steuerung oder dergleichen unter volumenmäßiger Vergrößerung des Vorratsbehälters.

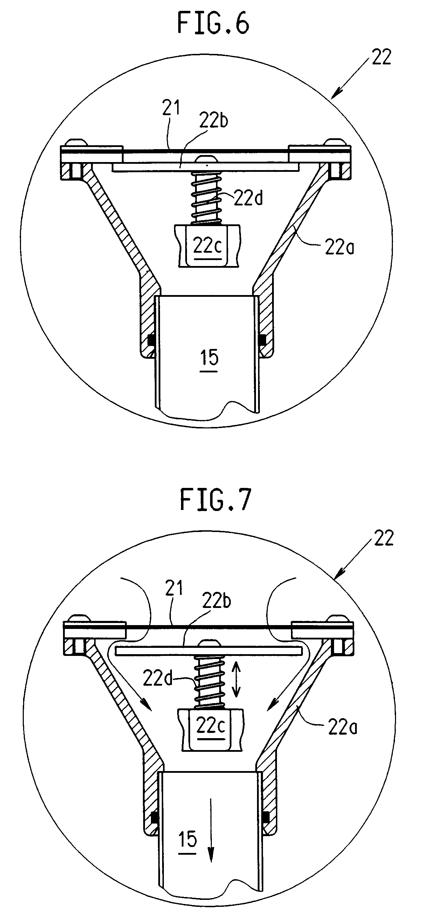

Der von einer Heizvorrichtung 19 erwärmte Luftstrom trifft zunächst auf eine Trocknungszone 10e im Trocknungsbehälter 10, wobei die Luft sowohl über den Auslaß 10b als auch über die Steigleitung 20 mit Öffnung 20a in die Trocknungszone gelangt. Von der Trocknungszone gelangt die Luft durch einen Anströmboden 10d in den oberen Bereich des Trocknungsbehälters, die eigentliche Bevorratungszone, die sie bei ausreichendem Druck über ein Rückschlagventil 22 wieder verläßt. Der Anströmboden ist nicht mehr wie bisher ein gesonderter Abschnitt, sondern innerhalb des Trocknungsbehälters angeordnet. Nach den Figuren 6,7 ist das Rückschlagventil am Ende der Rückführleitung 15 bedienungsfreundlich angeordnet im Innern des Trocknungsbehälters 10 und besteht aus einem Ventilgehäuse 22a, in dem eine Ventilscheibe 22b, ein Bolzen 22c und eine Feder 22d angeordnet sind, wobei das Ventil gegen die Kraft der Feder 22d geöffnet wird. Die Ventilfeder erzeugt die Kraft für den nötigen Förderdruck des Granulats. Über dem Ventil ist ein Filter 21 vorgesehen, um das Material im Trocknungsbehälter 10 zurückzuhalten. Der Trocknungsbehälter 10 ist im übrigen durch einen Deckel 10f abgedichtet.

Die Vorrichtung arbeitet wie folgt:

In Figur 1 ist ein Frischluftbetrieb dargestellt. Der Verstellschieber 16 ist ausgezogen, so daß der Anschluß 16b des Schiebers ein Ansaugen von Frischluft aus dem Innern des Gehäuses 18 für den Drucklufterzeuger 13 ermöglicht. Das Seitenkanalgebläse verdichtet die angesaugte Luft, die über die Heizvorrichtung 19 im Kanal 14 erwärmt wird. Ein Teilstrom der Luft wird über die Steigleitung 20 direkt in den Trichter geleitet. Der andere Teilstrom wird in den Förderrohrbereich geleitet, um eine Feststellung zu ermöglichen, ob weiteres Verarbeitungsmaterial in den Beschickungsbereich der Verarbeitungsmaschine gefördert werden muß oder nicht. Sobald nämlich im Bereich des Filters 12 kein Material mehr vorhanden ist, nimmt der Förderstrom durch die Förderleitung 11 zu, so daß Material wieder bis in den Bereich des Filters geblasen wird, bis die Öffnungen des Filters mit Verarbeitungsmaterial so verschlossen sind, daß ein weiteres Fördern zunächst nicht mehr möglich ist. Bezüglich dieser Funktionsweise kann jedoch auf die eingangs erwähnte DE-PS 24 09 128 verwiesen werden.

Die über den Kanal 14 und den Verteiler 25, der den Luftkanal in die Steigleitung 20 und die Förderleitung 11 überführt, zugeführte Luft, die bedarfsweise auch erhitzt ist, trocknet das im Trichter befindliche Granulat. Dadurch erhöht sich der Wassergehalt der nach oben steigenden Luft, so daß das aktuell zugeführte in der Trocknungszone 10e des Trocknungsbehälters 10 befindliche Material nahezu vollständig trocken ist. Die angereicherte feuchte Luft wird durch das Ventil 22 in die Umgebung abgeführt. Den Pfeilen folgend läßt sich nämlich feststellen, daß im Bereich des Schiebers 16 der Anschluß 16b verschlossen ist, so daß die über das Ventil 22 und den Grobfilter 21 entweichende Luft aus der Rückführleitung 15 über die Öffnung 15a in die Umgebung entweicht.

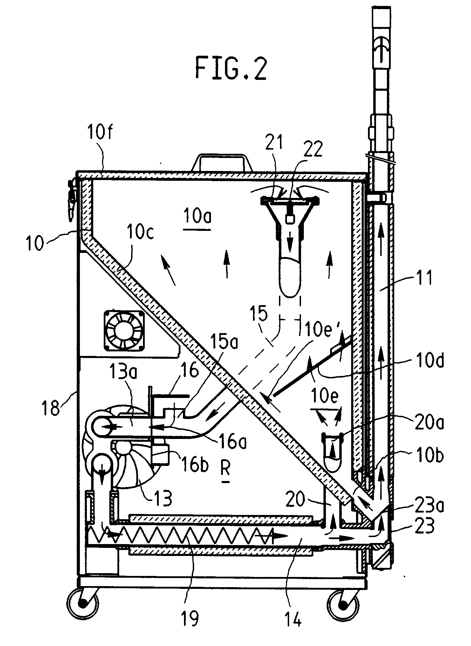

In Fig. 2 ist der Umluftbetrieb dargestellt. Im Gegensatz zu Fig. 1 ist der Schieber 16 eingeschoben, so daß der Anschluß 16a mit dem Ansaugstutzen 13a des Drucklufterzeugers in Verbindung steht. Während der Luftstrom durch Kanal 14 und Trocknungsbehälter 10 grundsätzlich gleich bleibt, wird nunmehr die von der Rückführleitung zurückgeführte Luft unmittelbar dem Drucklufterzeuger wieder zugeführt. Dabei auftretende Verluste werden durch einen zusätzlichen in die Rückführleitung 15 über die Öffnung 15a eintretenden Luftstrom ausgeglichen.

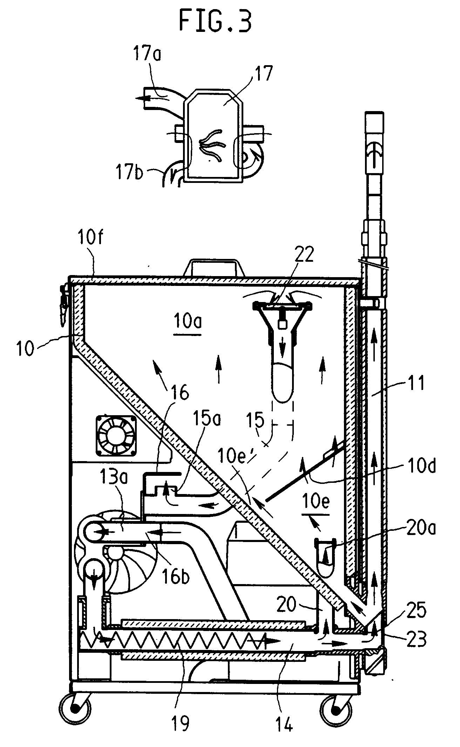

In Fig. 1 und Fig. 2 ist jeweils unter der Trennwand 10c ein Raum R für die bedarfsweise Anordnung eines Trockenluftgeräts 17 vorgesehen. Dieses Trockenluftgerät ist in Figur 3 im uneingebauten und in Figur 4 im eingebauten Zustand dargestellt. Es kann nun bedarfsweise an den Anschluß 16b des Schiebers 16 angeschlossen werden. Dadurch wird durch den Drucklufterzeuger 13 die Trockenluft angesaugt, die wie zuvor über die Heizung 19 und den Verteiler 25 in den Trockenbehälter eingeleitet wird. Im Trocknungsbehälter strömt die Luft wie bisher über den Anströmboden 10d durch die einzelnen Bereiche des Trocknungsbehälters 10. Die Rückführleitung 15 endet wie in Fig. 1 im Innern des Gehäuses, wobei die entweichende Luft über die Öffnung 15a austritt.

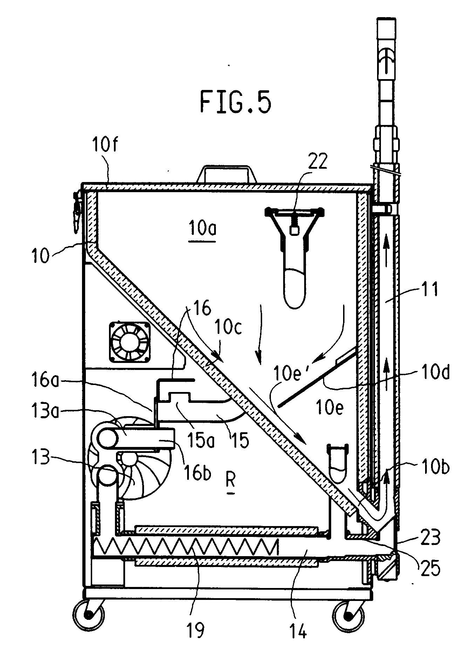

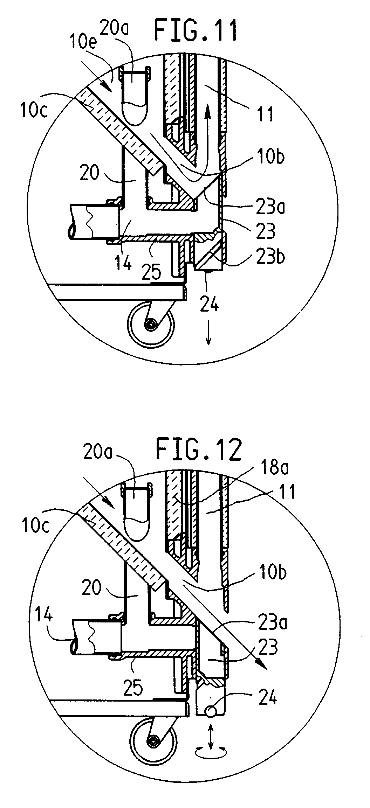

In Fig. 5 ist der Materialfluß dargestellt. Das Material wird in den Trichter zum Trocknen eingefüllt. Von unten wird das Material durch den Anströmboden 10e getrocknet, der eine Zuführöffnung 10e' aufweist, durch die das Material durch die Trichterschrägen geführt in die untere Trocknungszone 10e gelangt. Von hier wird das Material durch die Förderleitung 11 in die Spritzgießmaschine gefördert. Durch die durch den Einsatz des Schiebers begründete Aufteilung des Gehäuses in Vorratsbehälter und Raum für sonstige Bauteile durch die Trennwand 10c und die damit einhergehende Abkopplung von der Rückführleitung 15 ist es möglich, an der Seitenwand 18a den Auslaß 10b leicht zugänglich vorzusehen. In diesem Bereich wird ein Verstellelement 23 vorgesehen, das in einer Stellung den Auslaß mit der Förderleitung 15 verbindet und in einer Entleerungsstellung den Transportbehälter 10 nach außen öffnet (Fig. 12). Mit dem Material steht dabei grundsätzlich eine Wandung 23a in Verbindung, die für das Verarbeitungsmaterial undurchlässig ist, von der Druckluft jedoch durchströmt werden kann. Um das Verstellelement aus der Förderstellung in die Entleerungsstellung zu überführen, muß der Rastbolzen 24 gezogen werden und durch eine um die vertikale Achse v-v erfolgende Drehung um 180° wird die Wandung 23a in die Stellung gemäß Fig. 12 überführt, ohne daß Material in den Verteiler 25 gelangen kann. Durch die Wendelnut wird das Verstellelement 23 mit dem Verdrehen gleichzeitig abgesenkt, was den Auslaß nach außen öffnet. Um das Innere leicht zugänglich zu gestalten, sind die Seitenwände 18 lösbar und der Steuerungseinschub schubladenartig ausgebildet. Trotz des äußerlich kompakten Designs ist es im Innern möglich, durch ein Baukastenprinzip das Gerät an die unterschiedlichen Erfordernisse des Kunden anzupassen.
- 10: Trocknungsbehälter
- 10a: trichterförmiger Abschnitt
- 10b: Auslaß
- 10c: Trennwand
- 10d: Anströmboden
- 10e: Trocknungszone
- 10e': Zuführöffnung
- 10f: Deckel
- 11: Förderleitung
- 12: Filter
- 13: Drucklufterzeuger
- 13a: Ansaugstutzen
- 14: Kanal
- 15: Rückführleitung
- 15a: Öffnung
- 16: Schieber
- 16a,16b: Anschluß
- 17: Lufttrockner
- 17a: Stutzen
- 17b: Eigentrockenseite
- 18: Gehäuse
- 18a: Seite
- 19: Heizvorrichtung
- 20: Steigleitung
- 20a: Öffnung
- 21: weiterer Filter
- 22: Rückschlagventil
- 22a: Ventilgehäuse
- 22b: Ventilscheibe
- 22c: Bolzen
- 22d: Feder
- 23: Verstellelement
- 23a: Wandung
- 23b: Wendelnut
- 24: Rastbolzen
- 25: Verteiler
- v-v: vertikale Achse
- R: Raum

## Patentansprüche

1. Vorrichtung zur Beschickung einer Verarbeitungsmaschine mit Verarbeitungsmaterial, mit
- einem Drucklufterzeuger (13), der über einen Ansaugstutzen (13a) Luft ansaugt und Druckluft erzeugt,
- einem in der Vorrichtung angeordneten Trocknungsbehälter (10), aus dem die Verarbeitungsmaschine über eine Förderleitung (11) beschickbar ist, wobei die Druckluft die Förderleitung im Bereich der Verarbeitungsmaschine über einen für das Verarbeitungsmaterial undurchlässigen Filter (12) verläßt,
- einem im Trocknungsbehälter (10) vorgesehenen Kanal (14) für die Druckluft, von dem die Förderleitung (11) abzweigt und von dem auch Luft in den Transportbehälter überführbar ist,
- einer Rückführleitung (15), die am Trocknungsbehälter (10) angeschlossen ist und mit dem Ansaugstutzen (13a) des Drucklufterzeugers (13) für eine Umluftstellung verbindbar ist,
dadurch gekennzeichnet, daß am Ansaugstutzen (13a) des Drucklufterzeugers ein in wenigstens zwei Stellungen überführbares Überführungselement (Schieber 16) mit wenigstens einem ersten Anschluß (16a) und wenigstens einem zweiten Anschluß (16b) im Innern der Vorrichtung angeordnet ist,
daß am ersten Anschluß (16a) die Rückführleitung angeschlossen ist und über den zweiten Anschluß (16b) Umgebungsluft für einen Frischluftbetrieb ansaugbar ist und
daß im Innern des Gehäuses (18) der Vorrichtung am Ansaugstutzen (13a) des Drucklufterzeugers (13) Raum (R) für die Anordnung eines Lufttrockners (17) vorgesehen ist, der sowohl eine Luftmenge zum Trocknen des Verarbeitungsmaterials als auch zum Fördern des Verarbeitungsmaterials getrocknet zur Verfügung stellt.

2. Vorrichtung nach Anspruch 1, dadurch gekennzeichnet, daß der Trocknungsbehälter (10) einen trichterförmigen Abschnitt (10a) aufweist, dessen mit der Förderleitung (11) verbindbarer Auslaß (10b) so an die Seite (18a) des Gehäuses (18) gelegt ist, daß unter einer den Behälter etwa diagonal trennenden Trennwand (10c) des Trocknungsbehälters (10) der Raum (R) für die Anordnung des Lufttrockners (17) und der Rückführleitung (15), einer Steuerung, des Drucklufterzeugers (13) und des Kanals (14) im Innern des Gehäuses (18) ist.

3. Vorrichtung nach Anspruch 1, dadurch gekennzeichnet, daß ein von einer Heizvorrichtung (19) erwärmte Luftstrom durch einen Anströmboden (10d) von unten auf das Verarbeitungsmaterial trifft, der im Trocknungsbehälter (10) eine untere Trocknungszone (10e) über eine Zuführöffnung (10e') vom restlichen Trocknungsbehälter (10) abtrennt.

4. Vorrichtung nach Anspruch 1, dadurch gekennzeichnet, daß die im Innern des Gehäuses (18) angeordnete Rückführleitung (15) im Trocknungsbehälter (10) endet und über einen weiteren Filter (21) und ein Rückschlagventil (22) gegen den gegenüber der Atmosphäre abgedichteten Trocknungsbehälter (10) abgegrenzt ist.

5. Vorrichtung nach Anspruch 1, dadurch gekennzeichnet, daß an einem Auslaß (10b) des Trocknungsbehälters (10) ein Verstellelement (23) vorgesehen ist, das in einer Stellung den Auslaß mit der Förderleitung (15) verbindet und in einer Entleerungsstellung den Trocknungsbehälter (10) nach außen öffnet.

6. Vorrichtung nach Anspruch 5, dadurch gekennzeichnet, daß das Verstellelement (23) eine über Rastbolzen verrastbare Drehverstellung ist, deren dem Material zugewandte Wandung (23a) ein für das Verarbeitungsmaterial undurchlässiges Filter ist, das von der Druckluft durchströmbar ist.

7. Vorrichtung nach Anspruch 6, dadurch gekennzeichnet, daß die Drehverstellung entlang einer Wendelnut in die Entleerungsstellung um eine vertikale Achse (v-v) drehbar ist.

8. Vorrichtung nach Anspruch 1, dadurch gekennzeichnet, daß die Vorrichtung eine Kunststoff-Spritzgießmaschine mit Granulaten beschickt.

## Claims

1. Apparatus for feeding a processing machine with material to be processed, including
- a compressed-air generator (13), which sucks-in air via a suction pipe (13a) and generates compressed air,
- a drying container (10), which is disposed in the apparatus, and from which the processing machine is feedable via a feed pipe (11), the compressed air leaving the feed pipe in the region of the processing machine via a filter (12), which prevents passage of the material to be processed,
- a channel (14), which is provided for the drying container (10) for the compressed air, from which the feed pipe (11) branches-off, and from which air is also transferable to the container,
- a return pipe (15), which communicates with the drying container (10) and is connectable to the suction pipe (13a) of the compressed-air generator (13) for a recycling of air,
characterised in that a transfer element (slide 16), which is positionable in at least two positions, is disposed on the suction pipe (13a) of the compressed-air generator with at least one first connection (16a) and at least one second connection (16b) in the interior of the apparatus,
in that the return pipe communicates with the first connection (16a), and ambient air for a fresh air operation can be sucked-in via the second connection (16b), and
in that space (R) for the disposition of an air drier (17) on the suction pipe (13a) of the compressed-air generator (13) is provided in the interior of the housing (18) of the apparatus, said drier making available both a quantity of air for drying the material to be processed and a quantity of dried air for conveying the material to be processed.

2. Apparatus according to claim 1, characterised in that the drying container (10) has a funnel-shaped portion (10a), the outlet (10b) of which is connectable to the feed pipe (11) and is placed on the side (18a) of the housing (18) in such a manner that there is space (R) for the disposition of the air drier (17) and the return pipe (15), a control, the compressed-air generator (13) and the channel (14) in the interior of the housing (18) beneath a dividing wall (10c) of the drying container (10), said wall dividing the container substantially diagonally.

3. Apparatus according to claim 1, characterised in that a current of air, heated by a heating device (19), encounters the material to be processed from below through a flow base (10d), said base separating a lower drying zone (10e) in the drying container (10) via a feed aperture (10e') from the rest of the drying container (10).

4. Apparatus according to claim 1, characterised in that the return pipe (15), which is disposed in the interior of the housing (18), terminates in the drying container (10) and is defined via an additional filter (21) and a non-return valve (22) relative to the drying container (10), which is closed to the atmosphere.

5. Apparatus according to claim 1, characterised in that an adjusting element (23) is provided on an outlet (10b) of the drying container (10), which element connects the outlet to the feed pipe (15) in one position and opens the drying container (10) outwardly in an emptying position.

6. Apparatus according to claim 5, characterised in that the adjusting element (23) is a rotatable displacement means, which is lockable via locking pins, the wall (23a) of said displacement means facing the material being a filter, which prevents passage of the material to be processed and is traversable by the compressed air.

7. Apparatus according to claim 6, characterised in that the rotatable displacement means is rotatable about a vertical axis (v-v) along a helical groove into the emptying position.

8. Apparatus according to claim 1, characterised in that the apparatus feeds a plastics material injection moulding machine with granules.

## Revendications

1. Dispositif pour l'alimentation d'une machine de traitement en un matériau à traiter comprenant
- un générateur d'air comprimé (13) aspirant de l'air au travers d'un embout d'aspiration (13a) et produisant de l'air comprimé,
- une cuve de séchage (10) agencée dans le dispositif à partir de laquelle la machine de traitement peut être alimentée au travers d'un conduit d'alimentation (11) dans lequel l'air comprimé s'échappe du conduit d'alimentation au niveau de la machine de traitement au travers d'un filtre (12) imperméable au matériau à traiter,
- un canal (14) d'air comprimé prévu dans la cuve de séchage (10), canal à partir duquel se sépare le conduit d'alimentation (11) et à partir duquel de l'air peut être guidé dans la cuve de transport,
- un conduit de retour (15) relié à la cuve de séchage (10) et susceptible d'être relié à l'embout d'aspiration (13a) du générateur d'air comprimé (13) pour une circulation fermée,
caractérisé en ce que
un élément de conversion (tiroir 16) avec au moins deux positions est agencé en l'embout d'aspiration (13a) du générateur d'air comprimé, élément comprenant au moins un premier raccordement (16a) et au moins un deuxième raccordement (16b) à l'intérieur du dispositif,
en ce que le premier raccordement (16a) est relié au conduit de retour et qu'au travers du second raccordement (16b) de l'air ambiant peut être aspiré pour un fonctionnement par air libre, et
en ce qu'un espace (R) est à disposition à l'intérieur du boîtier (18) du dispositif au niveau de l'embout d'aspiration (13a) du générateur d'air comprimé (13) pour l'agencement d'un séchoir d'air (17) mettant à disposition aussi bien une quantité d'air pour sécher le matériau à traiter que pour alimenter le matériau à traiter.

2. Dispositif selon la revendication 1, caractérisé en ce que la cuve de séchage (10) présente une section (10a) en forme d'entonnoir dont la sortie (10b) susceptible d'être reliée au conduit d'alimentation (11) est agencée contre la paroi latérale (18a) du boîtier (18) de telle sorte que l'espace (R) situé sous une paroi de séparation (10c) sensiblement diagonale de la cuve de séchage (10) est prévue pour l'installation à l'intérieur du boîtier (18) du séchoir d'air (17), du conduit de retour (15) d'un pilotage, d'un générateur d'air comprimé (13) et d'un canal (14).

3. Dispositif selon la revendication 1, caractérisé en ce qu'un courant d'air réchauffé par un dispositif de chauffage (19) atteint de par le bas au travers d'un plancher de répartition (10d) le matériau à traiter, ce plancher séparant la cuve de séchage (10) en une zone de séchage inférieure (10e) du reste de la cuve de séchage et ceci au travers d'un orifice de conduit (10e').

4. Dispositif selon la revendication 1, caractérisé en ce que le conduit de retour (15) agencé à l'intérieur du boîtier (18) débouche à l'intérieur de la cuve de séchage (10) et est délimité par un filtre additionnel (21) et un clapet anti-retour (22) par rapport à la cuve de séchage (10) étanche par rapport à l'atmosphère.

5. Dispositif selon la revendication 1, caractérisé en ce qu'il est prévu un élément de réglage (23) en la sortie (10b) de la cuve de séchage (10) qui, en une position, relie la sortie avec le conduit d'alimentation (15) et qui, en une position de vidage, ouvre la cuve de séchage (10) vers l'extérieur.

6. Dispositif selon la revendication 5, caractérisé en ce que l'élément de réglage (23) peut être déplacé en rotation sur un boulon de support, élément dont la paroi (23a) en contact avec le matériau constitue un filtre imperméable pour le matériau à traiter mais perméable pour l'air comprimé.

7. Dispositif selon la revendication 6, caractérisé en ce que le dispositif de réglage rotatif est mobile en rotation autour d'un axe vertical (v-v) le long d'une rainure hélicoïdale jusqu'à sa position de vidage.

8. Dispositif selon la revendication 1, caractérisé en ce qu'il alimente une machine de moulage par injection de plastique avec des granulés.
